# EUROPEAN PATENT APPLICATION

(11) **EP 1 179 365 A2**
(43) Date of publication of application: **13.02.2002**
(21) Application number: 01202831.2
(22) Date of filing: 24.07.2001
(51) Int. Cl.: B01J 19/08, B01D 53/92, F01N 3/08

(54) **Plasma assisted processing of gas**

(30) Priority: 11.08.2000 GB 0020113
(71) Applicant: Accentus plc, Didcot, Oxfordshire OX11 0QJ (GB)
(72) Inventor: Inman, Michael, Abingdon, Oxfordshire OX14 5NU (GB); Segal, David Leslie, Radley, Abingdon, Oxfordshire OX14 3AB (GB)
(74) Representative: Lofting, Marcus John

(57) **Abstract**

A plasma assisted reactor for the treatment of gaseous media including a reactor bed of gas permeable dielectric or ferroelectric material wherein the reactor bed material is such as to have a non-linear initially negative temperature coefficient of resistance.

## Description

The present invention relates to plasma assisted reactors in which there is a bed of gas permeable dielectric or ferroelectric material in the interstices of which plasmas are created by the application of high voltages to the reactor bed, and more specifically, to such reactors for the treatment of exhaust emissions from internal combustion engines.

Non-thermal reactors also referred to as plasma assisted reactors in which there is included a reactor bed of gas permeable dielectric or ferroelectric material are known. For example, these reactors are described in GB 2,274,412, EP 1 017 477 B and WO 00/71866 as well as in US patents 3,983,021; 4,954,320 and 5,609,736. In the case of ferroelectric materials such as barium titanate, spherical particles can be made according to the methods described in WO 00/78691. In such reactors, the dielectric material often is chosen to have catalytic properties in relation to the reactions to be carried out in the reactors. In the case of emissions from internal combustion engines the catalytic reactions are in connection with the treatment of one or more of nitrogenous oxides, particulate including carbonaceous particulate, hydrocarbons including polyaromatic hydrocarbons, carbon monoxide and other regulated or unregulated combustion products. Examples of catalysts for the treatment of these emissions are described in WO 00/43102 and in the book 'Fundamentals of Industrial Catalytic Processes' by RJ Farrauto and CH Bartholomew, Blackie, 1997. A feature of many catalysts is that their catalytic activity is a function of their temperature. Although this may not be a great problem in circumstances where the reactors are in continuous operation, it is of importance when such reactors are used to treat the emissions from internal combustion engines, both because the noxious components of the exhaust gases are highest on initial start-up of the engines when the reactor bed material is cold and because many journeys are too short for the reactor bed to reach its most effective operating temperature.

One way of improving the situation is to heat the reactor bed ohmically. This approach has been used to heat a corrugated Fecralloy steel coil containing a catalytic coating as described in UK 1 469 527. Although the application for this coil was for treatment of the exhaust gases of internal combustion engines the use of a heated metal coil as described will not be suitable for use in a plasma reactor due to the anticipated difficulty in forming the plasma in the region occupied by an electrical conductor as the latter prevents establishment of a sufficiently high voltage between the electrodes that is required to establish the plasma. It is thus difficult to achieve ohmic heating whilst at the same time providing for the high electrical resistance required across the bed to sustain conditions for plasma generation.

It is an object of the present invention to provide an improved plasma assisted reactor in which this difficulty is substantially overcome.

According to the present invention there is provided a plasma assisted reactor for the treatment of gaseous media including a reactor bed of gas permeable dielectric or ferroelectric material wherein the reactor bed material is such as to have a non-linear initially negative temperature coefficient of resistance.

Preferably the reactor bed material is such that the transition from an initially negative temperature coefficient of resistance to a positive temperature coefficient of resistance occurs at a well-defined temperature and the resistivity of the material at the working temperature of the reactor is at least three orders of magnitude greater than the initial value.

A suitable material for the reactor bed is barium titanate which includes a proportion of certain metal oxides as dopants. Suitable metal oxides for use as dopants are oxides of calcium, lead, niobium or titanium. Such materials, which have strongly temperature dependent thermal coefficients of resistance often are known as positive temperature coefficient (PTC) materials and are discussed, for example in "Electroceramics", A.J. Moulson and J.M. Herbert, Chapman and Hall 1990.

The invention will now be described with reference to the accompanying drawings in which
Figure 1 is a longitudinal section of a gas plasma assisted reactor embodying the invention, and
Figure 2 is a graph showing the temperature coefficient of resistance of a typical ferroelectric material suitable for use in performing the present invention.

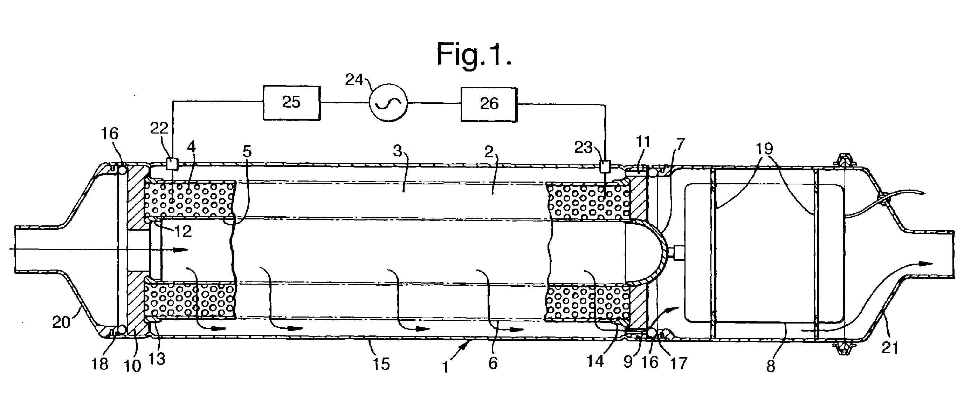

Referring to Figure 1 of the drawings, a reactor assembly 1 for treating the exhaust gases from internal combustion engines comprises a reactor bed 2 consisting of a body 3 of pellets 4 of barium titanate including a proportion of doped barium titanate pellets that behave as PTC materials. The reactor bed 2 is contained between inner and outer perforated stainless steel electrodes 5 and 6, respectively and two insulating ceramic end-plates 9 and 10 which also act as supports for the electrodes 5 and 6. The inner electrode 5 is closed by a thimble 7 which is connected to a high-voltage power supply 8. A convenient potential for the excitation of the plasma is of the order of kilovolts to tens of kilovolts and repetition frequencies in the range 50 to 5000 Hz, although higher frequencies of the order of tens of kilohertz can be used. Pulsed direct current is convenient for automotive use, but alternating potentials for example triangular or sine waves of the same or similar characteristics can be used. The end-plate 9, which is at the same end of the reactor bed 2 as the thimble 7 has a series of axial holes 11 around its periphery. The open end of the inner electrode 5 is held in position in the end plate 10 by a stainless steel ring 12 and the outer electrode 6 is held in position by two similar stainless steel rings 13 and 14. The stainless steel rings 12, 13 and 14 are so shaped as to act to reduce arcing between the electrodes 5 and 6 and the end-plates 9 and 10. The whole assembly is enclosed in a gas-tight stainless steel chamber 15 which together with the outer electrode 6 in use is grounded.

Thermal expansion of the reactor bed 2 is accommodated by compliant expansion rings 16 positioned between the end plates 9 and 10 and respective abutments 17 and 18 which form part of the chamber 15. The power supply 8 is positioned within the chamber 15 by means of perforated plates or spiders 19. The chamber 15 has inlet and outlet nozzles 20 and 21, respectively, by means of which it can be attached to the remainder of an internal combustion engine exhaust system. As the exhaust gases pass around the power supply 8, either the electrical component within it must be capable of operating at the temperatures of the exhaust gases, or the housing of the power supply needs to include some form of thermal insulation. As shown, the power supply 8 is situated at the cooler end of the reactor 1, but it can be positioned at the other end if so desired, or even placed elsewhere, but this would require the provision of a high voltage conductor and a suitable feed-through in the casing 15 of the reactor 1. The power supply can also be placed adjacent to the plasma assisted reactor as indicated in WO 00/05400.

Passing through the chamber 15 are two electrical connections 22 and 23 by means of which a low voltage drawn from a vehicle's alternator 24 can be passed through the reactor bed 2. In order to isolate the alternator 24 from the high frequency high voltage pulses produced by the power supply 8, two h.f. chokes 25 and 26, respectively are included in the connections 22 and 23.

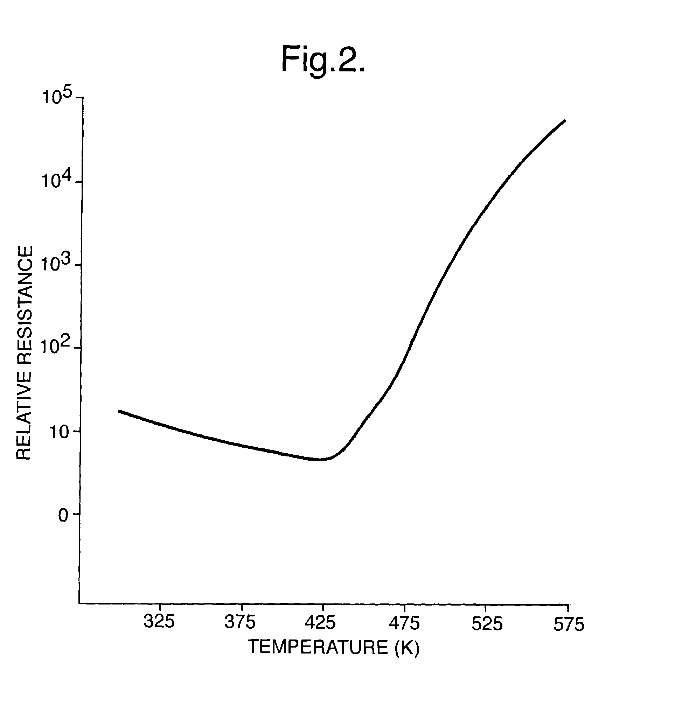

Referring to Figure 2, there is shown a resistance/temperature characteristic for a body made of barium titanate doped with appropriate oxide materials in order to induce PTC properties outlined below.

It can be seen that initially the temperature coefficient of resistance is negative until a temperature of about 170°C (450°K) is reached, at which point the temperature coefficient becomes positive and increases by several orders of magnitude until an equilibrium temperature of some 300°C (570°K) is reached. Thus, on initial start-up when the reactor bed 2 is at ambient temperature, even at the low voltages associated with automotive electrical systems, a high current can be passed through the reactor bed 2, so heating it rapidly. As the temperature of the reactor bed 2 reaches the value at which the temperature coefficient of resistance becomes positive the low voltage input power decreases rapidly to virtually zero. It should be appreciated that the temperature at which the sharp increase in resistance occurs is sensitive to the type and concentration of dopants.

An alternative way of initially heating the reactor bed 2 is to use high frequency pulses generated by the power supply 8 operated at the lower end of its output voltage range. For this method of initial heating to be practicable, the low-temperature resistivity of the material of the reactor bed 2 would have to be in the region of a hundred times that required for ohmic heating of the reactor bed 2.

The embodiments of reactor described in these examples may include catalytic components which may require the addition of additives such as oxidant or reductant additives or be installed as part of an emissions control system employing catalysts or other emission control devices for the plasma assisted treatment of the exhaust gases from, but not restricted to, internal combustion engines for example for stationary turbines. Examples of catalytic materials and additives for the treatment of carbonaceous materials and nitrogen oxides are described in WO 00/71866, WO 00/43102, described in PCT/GB01/00442, filed 2 February 2001, UK priority 30 June 2000, PCT/GB01/01571, filed 11 April 2001, UK priority 11 April and 18 August 2000, GB 00 20287.9, UK filed 17 August 2000 and EP 1 017 477B. Dielectric bed material may also act to selectively trap or adsorb a predetermined chemical species as described in WO 01/30485 while the reactor embodiments can be combined with a vehicle power supply system described in WO 00/50746. Other emission control devices may comprise but are not restricted to exhaust gas recirculation (EGR), variations in ignition timing, fuel injection timing and fuel injection pulse rate shaping. The reactor of these examples can be used in conjunction with a power supply and engine management system as described in the specification of application WO 00/50746. An article 'Stop go systems get the green light' in European Automotive Design, April 1998, pages 24-26 describes an example of an integrated starter alternator damper system (ISAD). Such an ISAD can be used as part of a power supply system to power a plasma assisted emissions control system of which a reactor as described herein is part. In addition, other power sources such as but not limited to single/multiple output 12/14V alternator technologies e.g. 14V/42V, fuel cells, gas turbines, solar cells and heat exchangers can be the primary or part-provider of the electrical-generating power source that can also be used to power the power supply system for the reactor.

Although not part of the present invention, reactor bed material can also be used in the treatment of exhausts without the use of non-thermal plasma reactors. For example a ceramic honeycomb can be fabricated out of a doped ferroelectric or dielectric material that acts as a PTC material, the honeycomb can be coated with a catalyst material and exposed to the exhausts from an internal combustion engine. Ohmic heating of the PTC material in the form of a honeycomb can aid the catalytic treatment of the exhaust on initial start-up of the engine. When used in a plasma system the PTC material can be used, through selection of its composition, to raise the temperature of the reactor above that which would be attained by generation of the non-thermal plasma. Reactor bed material with PTC properties can be used in dielectric barrier or silent discharge reactors and the shape of the dielectric material is not restricted to pellets but can also be in the form of spheres, extrudates, fibres, sheets, wafers, frits, meshes, coils, foams, membranes, ceramic honeycomb monolith or granules or as a coating on or contained within a material. Examples of plasma assisted reactors in which PTC materials described herein can be used are shown in WO 00/05400 and in WO 00/71866.

## Claims

1. A plasma assisted reactor for the treatment of gaseous media including a reactor bed of gas permeable dielectric or ferroelectric material wherein the reactor bed material is such as to have a non-linear initially negative temperature coefficient of resistance.

2. A reactor according to Claim 1 wherein the transition of the temperature coefficient of resistance of the reactor bed material from an initial negative value to a positive value occurs at a well defined value and the positive temperature coefficient of resistance of the reactor bed material is considerably greater than the initial negative coefficient of resistance.

3. A reactor according to Claim 2 wherein the positive temperature coefficient of resistance of the reactor bed has a value approximately four times that of the initial negative temperature coefficient of resistance.

4. A reactor according to any preceding claim wherein the final resistivity of the reactor bed material is at least three orders of magnitude greater than the initial value.

5. A reactor according to any preceding claim wherein the reactor bed is made of barium titanate including a metal oxide dopant material adapted to produce the said initially negative temperature coefficient of resistance.

6. A reactor according to Claim 5 wherein the dopant material is chosen from the group comprising oxides of calcium, lead, niobium and titanium.

7. A reactor according to any preceding claim including means for providing an electric current to heat the reactor bed chemically to a working temperature.

8. A reactor according to any of Claims 1 to 6 wherein a source of a high voltage potential used to generate a plasma in a gaseous medium in the interstices within the gas permeable reactor bed also is used to heat initially the reactor bed to a working temperature.

9. A reactor according to any preceding claim adapted to form part of the exhaust system of an internal combustion engine.

10. A reactor for the plasma assisted treatment of gaseous media substantially as hereinbefore described and with reference to the accompanying drawings.
